# EUROPÄISCHE PATENTSCHRIFT

(11) **EP 0 906 858 B1**
(45) Veröffentlichungstag und Bekanntmachung des Hinweises auf die Patenterteilung: **26.11.2003**
(21) Anmeldenummer: 98116488.2
(22) Anmeldetag: 01.09.1998
(51) Int. Cl.: B60T 13/52

(54) **Bremsanlage für Kraftfahrzeuge**
Brake system for vehicles
Système de freinage pour véhicules

(30) Priorität: 04.10.1997 DE 19743959
(43) Veröffentlichungstag der Anmeldung: 07.04.1999
(73) Patentinhaber: Bayerische Motoren Werke Aktiengesellschaft, 80788 München (DE)
(72) Erfinder: Unterforsthuber, Jakob, 82216 Maisach (DE); Jakobi, Dieter, 82178 Puchheim (DE); Kühberger, Johannes, 85244 Grossinzemoos (DE)

(56) Entgegenhaltungen:
- DE-A- 3 606 136
- US-A- 3 685 289

## Beschreibung

Die Erfindung bezieht sich auf eine Bremsanlage für Kraftfahrzeuge nach dem Oberbegriff des Patentanspruchs 1.

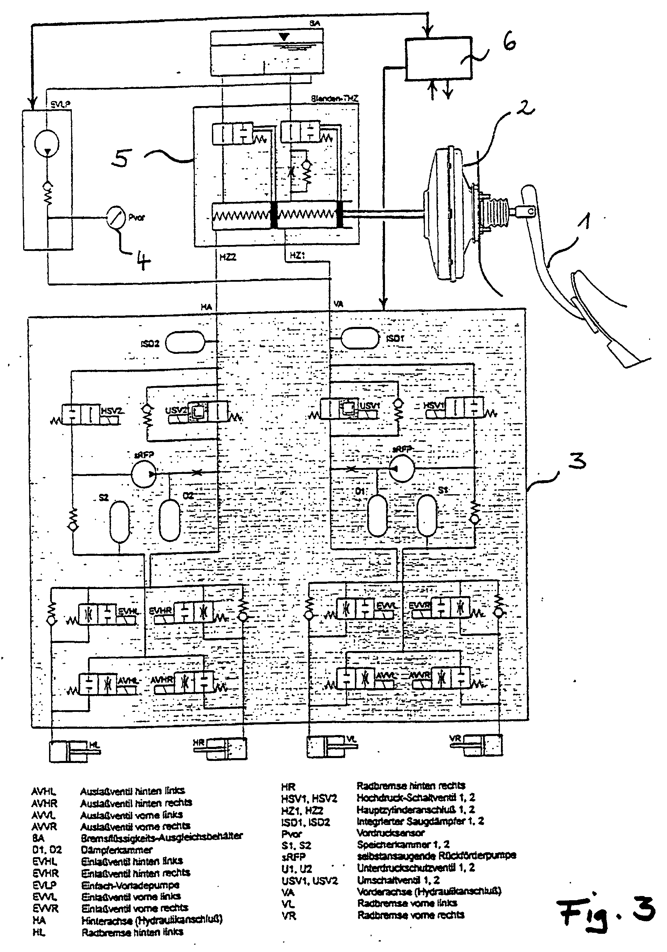

Eine derartige Bremsanlage ist beispielsweise durch die DSC-Systeme von BMW, die eine Weiterentwicklung der Schlupfregelsysteme ABS und ASC darstellen, bekannt. Ein derartiges DSC-System von BMW ist beispielsweise auf den Seiten 134 ff. und 208 ff. der Automobiltechnischen Zeitschrift ATZ, 1997, beschrieben. Darüber hinaus ist eine derartige bekannte Bremsanlage in Fig. 3 dargestellt.

Teil dieser bekannten Bremsanlagen ist ein Bremskraftverstärker, bei dessen Ausfall gemäß den Zulassungsvoraussetzungen bei Typprüfungen derzeit mit einer Fußkraft von maximal 500 N eine Verzögerung von 2,9 m/s² erreicht werden muß. Diese Forderung kann durch entsprechende Auslegung des hydraulisch-mechanischen Übersetzungsverhältnisses (Pedalübersetzung, Hauptbremszylinder-Durchmesser) erfüllt werden. Jedoch ergeben sich bei schweren Fahrzeugen mit dieser Auslegung des Übersetzungsverhältnisses lange Pedalwege und ein unerwünscht weiches Pedalgefühl bei Normalbremsungen. Bei einem Ausfall des Bremskraftverstärkers sind die für eine Verzögerung erforderlichen Pedalkräfte so hoch, daß der Fahrer einen Totalausfall der Bremsanlage vermuten und unangemessen reagieren könnte.

Aus der nachveröffentlichten WO98/35867 ist bekannt, nach einem Ausfall des Bremskraftverstärkers den Bremsdruck in den Bremskreisen so einzustellen, daß er dem Druck im Hauptzylinder, d.h. dem vom Benutzer gewünschten Bremsdruck entspricht.

Die nachveröffentlichte EP 1067032 zeigt, daß bei betätigtem Bremspedal und Ausfall des Bremskraftverstärkers durch aktiven Bremsdruckaufbau eine Mindest-Fahrzeugverzögerung eingestellt werden soll.

Es ist Aufgabe der Erfindung, eine Bremsanlage eingangs genannter Art derart zu verbessern, daß auch mit ausgefallenem Bremskraftverstärker eine für den Fahrer noch zufriedenstellende Verzögerung erreicht wird.

Diese Aufgabe wird durch die kennzeichnenden Merkmale der Ansprüche 1 und 2 gelöst.

Erfindungswesentlich ist die Erkennung eines Ausfalls des Bremskraftverstärkers und die Erzeugung eines Bremsdruckes in den Radbremsen mittels der elektronisch regelbaren Bremseinheit derart, daß sich bei einer bestimmten durch den Fahrer über das Bremspedal aufgebrachten Pedalkraft eine Mindest-Verzögerung entsprechend einem vorgegebenen Mindest-Soll-Verzögerungsverlauf ergibt. Die Pedalkraft wird direkt oder aus einer Pedalbetätigungsgröße, die direkt proportional zu der durch den Fahrer über das Bremspedal aufgebrachten Pedalkraft ist, ermittelt. Eine derartige Pedalbetätigungsgröße ist vorzugsweise der am Ausgang des Hauptbremszylinders herrschende Vordruck, der üblicherweise ohnehin mittels eines Drucksensors in der Hydraulikleitung von dem der Bremsanlage zugeordneten elektronischen Steuergerät erfaßt wird. Alternativ ist jedoch auch die direkte Messung der Pedalkraft möglich.

Im elektronischen Steuergerät wird bei Vorliegen einer bestimmten Pedalkraft bzw. Pedalbetätigungsgröße die hierauf erzielte Ist-Verzögerung ermittelt und mit der Soll-Verzögerung entsprechend dem vorgegebenen Mindest-Sollverzögerungsverlauf verglichen. Ist die Soll-Verzögerung größer als die Ist-Verzögerung, wird durch die elektronisch regelbare Bremseinheit der Bremsdruck in den Radbremsen erhöht, bis die Soll-Verzögerung erreicht ist.

Der vorgegebene Mindest-Soll-Verzögerungsverlauf ist beispielsweise als Kennlinie im elektronischen Steuergerät abgespeichert und derart definiert, daß die Zulassungsvoraussetzungen für eine Typprüfung bei Ausfall des Bremskraftverstärkers zumindest erfüllt werden.

Grundvoraussetzung für die erfindungsgemäße Bremsanlage ist eine elektronisch regelbare Bremseinheit, wie z. B. die DSC-Hydraulik, durch die unabhängig von der durch den Fahrer über das Bremspedal aufgebrachten Pedalkraft bzw. unabhängig von dem am Ausgang des Hauptbremszylinders herrschenden Vordruck der Bremsdruck in den Radbremsen einstellbar ist.

Der Ausfall des Bremskraftverstärkers wird auf zwei verschiedene Arten erkannt:
1.
   Ein Ausfall des Bremskraftverstärkers liegt beispielsweise vor, wenn sich im Bremskraftverstärker kein Vakuum befindet. Dies wird durch einen Differenzdrucksensor am Bremskraftverstärker erfaßt, der den Druck im Bremskraftverstärker, beispielsweise in dessen Vakuumkammer, mit dem Atmosphärendruck vergleicht, und ein Signal abgibt, wenn keine Differenz vorliegt. Wenn durch den Differenzdrucksensor, der auch nur als Schalter ausgebildet sein kann, das Vorliegen von Atmosphärendruck im Bremskraftverstärker angezeigt wird, und gleichzeitig jedoch durch die Betätigung des Bremspedals durch den Fahrer im Hauptbremszylinder Druck aufgebaut wird, so schließt das elektronische Steuergerät daraus auf einen Ausfall des Bremskraftverstärkers. Durch diese Methode wird die häufigste Ausfallursache erkannt, die z. B. durch eine defekte Vakuumversorgung auftritt.
2.
   Ein Ausfall des Bremskraftverstärkers liegt auch dann vor, wenn sich zwar im Bremskraftverstärker Vakuum befindet, das Ansaugen von atmosphärischer Luft dagegen behindert ist. In diesem Fall kann in der Arbeitskammer des Bremskraftverstärkers ein etwas niedrigerer Druck bzw. ein etwas höherer Unterdruck als in der Vakuumkammer des Bremskraftverstärkers entstehen, wenn der Fahrer das Bremspedal betätigt. Höchstens entsteht in der Arbeitskammer der gleiche Druck bzw. Unterdruck als in der Vakuumkammer. Bei einer intakten Anlage ist jedoch der Druck in der Arbeitskammer üblicherweise bei Betätigung des Bremspedals immer höher als in der Vakuumkammer. Die Druckdifferenz zwischen dem Druck in der Arbeitskammer und dem Druck in der Vakuumkammer kann mittels eines Differenzdrucksensors zwischen der Arbeitskammer und der Vakuumkammer detektiert werden.

Bei einer Ausfallerkennung des Bremskraftverstärkers kann zusätzlich zur Bremsdruckerzeugung durch die elektronisch regelbare Bremseinheit auch eine Warnung des Fahrers vorgenommen werden.

Durch die erfindungsgemäße Bremsanlage kann der Fahrer bei einem Ausfall des Bremskraftverstärkers noch mit zumutbaren Pedalkräften bremsen.

In der Zeichnung ist ein Ausführungsbeispiel dargestellt. Es zeigen
- Fig. 1: einen Bremskraftverstärker, der zur Erkennung des Ausfalls des Bremskraftverstärkers mit Differenzdrucksensoren versehen ist,
- Fig. 2: Beispiele für einen Mindest-Soll-Verzögerungsverlauf und
- Fig. 3: eine mögliche bekannte Bremsanlage, durch die die Erfindung realisiert werden kann.

Fig. 3 zeigt eine bekannte Bremsanlage, wie sie beispielsweise auf der Seite 212 der bereits genannten Druckschrift "ATZ", 1997, teilweise dargestellt ist. Bei dieser Bremsanlage sind ein Bremspedal 1 mit einem Bremskraftverstärker 2, ein Bremskraftverstärker 2 mit einem Hauptbremszylinder 5 und ein Hauptbremszylinder 5 mit einer elektronisch regelbaren Bremseinheit, hier eine Hydraulikeinheit, verbunden. Durch die elektronisch regelbare Bremseinheit im Form einer Hydraulikeinheit 3 ist unabhängig von dem am Ausgang des Hauptbremszylinders 5 herrschenden Vordruck der Bremsdruck in den Radbremsen HL, HR, VL und VR einstellbar. Mittels eines Vordrucksensors 4 ist der am Ausgang des Hauptbremszylinders 5 herrschende Vordruck (Pvor) von einem der Bremsanlage zugeordneten elektronischen Steuergerät 6 erfaßbar. Dieser Vordruck ist eine Pedalbetätigungsgröße, die direkt proportional zu der durch den Fahrer über das Bremspedal aufgebrachten Pedalkraft F ist.

Das elektronische Steuergerät 6 weist weitere Ein- und Ausgänge für weitere Ein- und Ausgangssignale auf; insbesondere sind Steuerleitungen vom Steuergerät 6 zur Ansteuerung der Aktuatoren der Bremseinheit 3 vorgesehen.

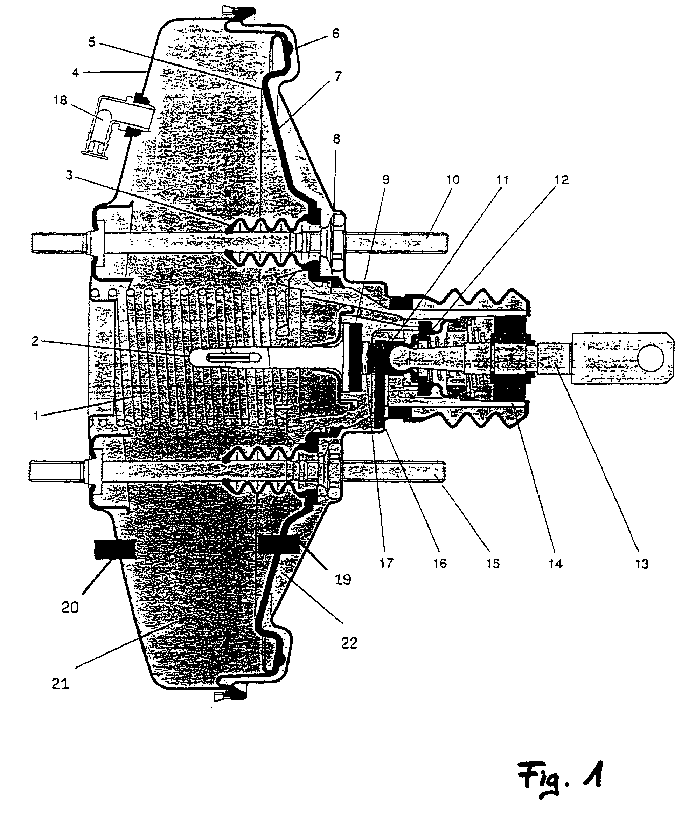

In Fig. 1 ist eine mögliche Ausgestaltung des in Fig. 3 dargestellten Bremskraftverstärkers 2 gezeigt. Bekannte Bremskraftverstärker weisen beispielsweise folgende Komponenten auf:

Eine Feder 1, einen Reaktionskolben 2, einen Dichtbalg 3, einen Gehäuseboden 4, einen Membranteller 5, einen Gehäusedeckel 6, eine Membran 7, ein Ventilgehäuse 8, eine Reaktionsscheibe 9, einen Zugbolzen 10, einen Fühlkolben 11, ein Steuerventil 12, eine Betätigungsstange 13, einen Luftfilter 14, einen Zugbolzen 15, einen Riegel 16, eine Fühlscheibe 17 und einen Vakuumanschluß 18.

Zur Erklärung der Funktionsweise bekannter Bremskraftverstärker wird insbesondere auf die Veröffentlichung (Nr. XFB 113(D)) der Firma Lucas zu Bremsbetätigungseinrichtungen, 1994, Seite 2.13 bis 2.20, verwiesen.

Wesentlich für die Erfindung ist die Erweiterung eines bekannten Bremskraftverstärkers 2 (Fig. 3) vom Vakuumtyp gemäß Fig. 1 um einen Differenzdrucksensor 20 zwischen der Vakuumkammer 21 des Bremskraftverstärkers und der Atmosphäre sowie um einen Differenzdrucksensor 19 zwischen der Vakuumkammer 21 und der Arbeitskammer 22 des Bremskraftverstärkers. Die Drucksensoren 19 und 20 können lediglich als Schalter ausgestaltet sein, deren erster Schaltzustand bei Vorliegen eines Differenzdruckes und deren zweiter Schaltzustand bei Nichtvorliegen eines Differenzdruckes eingestellt werden.

Die Signale der Differenzdrucksensoren 19 und 20 werden vom Steuergerät 6 erfaßt und ausgewertet. Wird mittels des Differenzdrucksensors 20 (Fig. 1) erkannt, daß zwischen dem Druck in der Vakuumkammer 21 und dem Atmosphärendruck keine Differenz vorliegt und wird mittels des Vordrucksensors 4 (Fig. 3) erkannt, daß der Druck am Ausgang des Hauptbremszylinders 5 ansteigt oder eine vorgegebene Schwelle überschritten hat, schließt das Steuergerät 6 daraus auf den Ausfall des Bremskraftverstärkers. In diesem Fall befindet sich im Bremskraftverstärker kein Vakuum.

Zusätzlich oder alternativ schließt das Steuergerät 6 auf den Ausfall des Bremskraftverstärkers, wenn mittels des Differenzdrucksensors 19 erkannt wird, daß der Druck in der Arbeitskammer 22 höchstens gleich dem Druck in der Vakuumkammer 21 ist, und wenn gleichzeitig mittels des Vordrucksensors 4 (Fig. 3) erkannt wird, daß der Druck am Ausgang des Hauptbremszylinders 5 ansteigt oder eine vorgegebene Schwelle überschritten hat. Ist mittels des Differenzdrucksensors 19 eindeutig meßbar, daß der Druck in der Arbeitskammer 22 kleiner als der Druck in der Vakuumkammer 21 ist bzw. daß der Unterdruck in der Arbeitskammer 22 größer als der Unterdruck in der Vakuumkammer 21 ist, kann bereits auf den Ausfall des Breskraftverstärkers geschlossen werden, bevor mittels des Vordrucksensors 4 (Fig. 3) erkannt wird, daß der Druck am Ausgang des Hauptbremszylinders 5 ansteigt oder eine vorgegebene Schwelle überschritten hat. In diesen Fällen ist das Ansaugen atmosphärischer Luft in die Arbeitskammer 22 behindert.

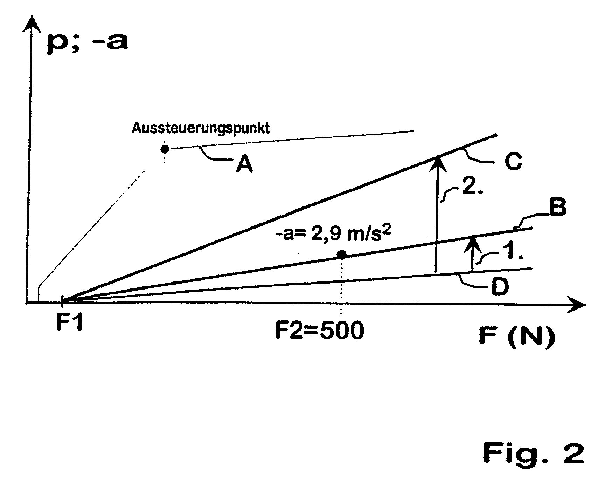

Wird beispielsweise auf die vorbeschriebene Art und Weise der Ausfall des Bremskraftverstärkers erkannt, wird mittels des elektronischen Steuergeräts 6 und mittels der elektronisch regelbaren Bremseinheit 3 der Bremsdruck p in den Radbremsen HL, HR, VL und VR derart erzeugt, daß sich ein vorgegebener Mindest-Soll-Verzögerungsverlauf B oder C (Fig. 2) in Abhängigkeit von der Pedalkraft F bzw. einer ihr proportionalen Pedalbetätigungsgröße ergibt.

In Fig. 2 ist auf der X-Achse die Pedalkraft F in Newton und auf der Y-Achse der Bremsdruck p in den Radbremsen, der direkt proportional zur Verzögerung des Fahrzeuges ist, aufgetragen. Der dünne Verzögerungsverlauf A stellt einen normalen Verzögerungsverlauf bei intaktem Bremskraftverstärker dar, dessen Gradient im Aussteuerungspunkt abnimmt. Der Gradient des Verzögerungsverlaufs A nach dem Aussteuerpunkt entspricht dem Gradienten des Verzögerungsverlaufes D, der bei Ausfall des Bremskraftverstärkers nur noch erreicht werden würde. Wird jedoch beispielsweise als Zulassungsvoraussetzung für eine Typprüfung vorgeschrieben, daß bei Ausfall des Bremskraftverstärkers mit einer Fußkraft von 500 N eine Verzögerung -a von 2,9 m/s² erreicht werden muß, wird in einem Fall 1. der Verzögerungsverlauf B als Mindest-Soll-Verzögerungsverlauf vorgegeben. Alternativ kann jedoch auch in einem Fall 2. ein Mindest-Soll-Verzögerungsverlauf C vorgegeben werden, der zu einer stärkeren Verzögerung im Vergleich zu den Zulassungsvoraussetzungen führt. Durch den Verzögerungsverlauf C soll jedoch die Charakteristik des Bremsverhaltens von der eines Bremsverhaltens mit intaktem Bremskraftverstärker noch abweichen, um den Fahrer haptisch auf eine Anomalie aufmerksam zu machen.

Wird also im Steuergerät 6 der Ausfall des Bremskraftverstärkers erkannt, wird der Bremsdruck p in den Radbremsen derart erzeugt, daß sich in Abhängigkeit von der Pedalkraft F der Mindest-Soll-Verzögerungsverlauf B oder C ergibt.

Durch dieses erfindungsgemäße Ausführungsbeispiel wird einerseits der Fahrer auf das Vorliegen einer Anomalie aufmerksam gemacht, andererseits wird jedoch noch eine zufriedenstellende Verzögerung zur Verfügung gestellt.

## Patentansprüche

1. Bremsanlage für Kraftfahrzeuge mit einem Bremspedal (1), mit einem Bremskraftverstärker (2), mit einem Hauptbremszylinder (5) und mit einer elektronisch regelbaren Bremseinheit (3), die zwischen dem Hauptbremszylinder (5) und den Radbremsen (HL, HR, VL, VR) angeordnet ist und durch die mittels eines elektronischen Steuergeräts (6) der Bremsdruck in den Radbremsen unabhängig von dem am Ausgang des Hauptbremszylinders (5) herrschenden Vordruck einstellbar ist, **dadurch gekennzeichnet, dass** bei Ausfall des Bremskraftverstärkers (2) mittels des elektronischen Steuergeräts (6) und mittels der elektronisch regelbaren Bremseinheit (3) der Bremsdruck (p) in den Radbremsen (HL, HR, VL, VR) derart erzeugt wird, daß sich ein vorgegebener Mindest-Soll-Verzögerungsverlauf (B; C) in Abhängigkeit von einer Pedalbetätigungsgröße (F), die direkt proportional zu der durch den Fahrer über das Bremspedal (1) aufgebrachten Pedalkraft ist, ergibt, wobei der Ausfall des Bremskraftverstärkers (2) erkannt wird, wenn zwischen dem Druck in der Vakuumkammer (21) und dem Atmosphärendruck keine Differenz gemessen wird, der Druck am Ausgang des Hauptbremszylinders (5) jedoch ansteigt oder eine vorgegebene Schwelle überschreitet.

2. Bremsanlage für Kraftfahrzeuge mit einem Bremspedal (1), mit einem Bremskraftverstärker (2), mit einem Hauptbremszylinder (5) und mit einer elektronisch regelbaren Bremseinheit (3), die zwischen dem Hauptbremszylinder (5) und den Radbremsen (HL, HR, VL, VR) angeordnet ist und durch die mittels eines elektronischen Steuergeräts (6) der Bremsdruck in den Radbremsen unabhängig von dem am Ausgang des Hauptbremszylinders (5) herrschenden Vordruck einstellbar ist, **dadurch gekennzeichnet, dass** bei Ausfall des Bremskraftverstärkers (2) mittels des elektronischen Steuergeräts (6) und mittels der elektronisch regelbaren Bremseinheit (3) der Bremsdruck (p) in den Radbremsen (HL, HR, VL, VR) derart erzeugt wird, daß sich ein vorgegebener Mindest-Soll-Verzögerungsverlauf (B; C) in Abhängigkeit von einer Pedalbetätigungsgröße (F), die direkt proportional zu der durch den Fahrer über das Bremspedal (1) aufgebrachten Pedalkraft ist, ergibt, wobei der Ausfall des Bremskraftverstärkers (2) erkannt wird, wenn der Druck in der Arbeitskammer (22) höchstens gleich dem Druck in der Vakuumkammer (21) ist, der Druck am Ausgang des Hauptbremszylinders (5) jedoch ansteigt oder eine vorgegebene Schwelle überschreitet.

## Claims

1. A braking system for motor vehicles with a brake pedal (1), with a brake servo (2), with a main brake cylinder (5), and with an electronically controlled braking unit (3), which is arranged between the main brake cylinder (5), and the wheel brakes (HL, HR, VL, VR) and by which using an electronic control unit (6) the brake pressure in the wheel brakes can be adjusted independently of the pre-pressure acting at the output of the main brake cylinder (5), **characterised in that** in the event of failure of the brake servo (2) a brake pressure (p) is generated in the wheel brakes (HL, HR, VL, VR) by means of the electronic control unit (6) and by means of the electronically controlled brake unit (3) such that a predetermined least target braking curve (B:C) results, depending upon a pedal actuating force (F), which is directly proportional to the pedal power exerted by the driver on the brake pedal (1), whereby the failure of the servo (2) is detected when no difference is measured between the pressure in the vacuum chamber (21) and the atmospheric pressure but the pressure at the output of the main brake cylinder (5) rises or exceeds a predetermined threshold.

2. A braking system for motor vehicles with a brake pedal (1) with a brake servo (2) with a main braking cylinder (5) and with an electronically controlled braking unit (3) which is arranged between the main brake cylinder (5) and the wheel brakes (HL, HR, VL, VR) and by means of which the braking pressing in the wheel brakes is adjustable independently of the pre-pressure acting at the output of the main brake cylinder (5) by means of an electronic controlled unit (6), **characterised in that** in the event of the failure of the brake servo (2) a brake pressure (p) is generated in the wheel brakes (HL, HR, VL, VR) by means of an electronically controlled brake unit (3) such that a predetermined least target braking curve (B:C) depending upon the pedal actuating force (F) which is directly proportional to the pedal power exerted by the driver on the brake pedal (1), whereby the failure of the brake servo (2) is detected when the pressure in the working chamber (22) is at the most equal to the pressure in the vacuum chamber (21), the pressure at the output of the main brake cylinder (5) however rises or exceeds a predetermined threshold.

## Revendications

1. Système de freinage pour véhicules automobiles avec une pédale de frein (1), avec un servofrein (2), avec un maître-cylindre de frein (5) et avec une unité de freinage à régulation électronique (3), laquelle est disposée entre le maître-cylindre de frein (5) et les freins des roues (AR gauche, AR droite, AV gauche, AR droite), et par laquelle, au moyen d'un appareil de commande électronique (6), la pression de freinage dans les freins des roues est réglable indépendamment de la pression d'admission régnant à la sortie du maître-cylindre de frein (5),
**caractérisé en ce que**
en cas de défaillance du servofrein (2), la pression de freinage (p) dans les freins des roues (AR gauche, AR droite, AV gauche, AR droite) est générée au moyen de l'appareil de commande électronique (6) et au moyen de l'unité de freinage à régulation électronique (3), de façon à obtenir une courbe (B, C) prédéterminée de la décélération minimale de consigne en fonction d'une grandeur d'actionnement de la pédale (F) qui est directement proportionnelle à la force sur la pédale exercée par le conducteur sur la pédale de frein (1), la défaillance du servofrein (2). étant détectée lorsque, entre la pression dans la chambre à vide (21) et la pression atmosphérique, aucune différence n'est mesurée, mais la pression à la sortie du maître-cylindre de frein (5) s'élève ou dépasse un seuil prédéterminé.

2. Système de freinage pour véhicules automobiles avec une pédale de frein (1), avec un servofrein (2), avec un maître-cylindre de frein (5) et avec une unité de freinage à régulation électronique (3), laquelle est disposée entre le maître-cylindre de frein (5) et les freins des roues (AR gauche, AR droite, AV gauche, AR droite), et par laquelle, au moyen d'un appareil de commande électronique (6), la pression de freinage dans les freins des roues est réglable indépendamment de la pression d'admission régnant à la sortie du maître-cylindre de frein (5),
**caractérisé en ce que**
en cas de défaillance du servofrein (2), la pression de freinage (p) dans les freins des roues (AR gauche, AR droite, AV gauche, AR droite) est générée au moyen de l'appareil de commande électronique (6) et au moyen de l'unité de freinage à régulation électronique (3), de façon à obtenir une courbe (B, C) prédéterminée de la décélération minimale de consigne en fonction d'une grandeur d'actionnement de la pédale (F) qui est directement proportionnelle à la force sur la pédale exercée par le conducteur sur la pédale de frein (1), la défaillance du servofrein (2) étant détectée lorsque la pression dans la chambre de travail (22) est au maximum égale à la pression dans la chambre à vide (21), mais la pression à la sortie du maître-cylindre de frein (5) s'élève ou dépasse un seuil prédéterminé.
